# FASCICULE DE BREVET EUROPEEN

(11) **EP 1 440 045 B1**
(45) Date de publication et mention de la délivrance du brevet: **21.06.2006**
(21) Numéro de dépôt: 02795336.3
(22) Date de dépôt: 24.10.2002
(51) Int. Cl.: C04B 41/90, C04B 37/00, C04B 37/02

(54) **PROCEDE DE METALLISATION ET/OU DE BRASAGE PAR UN ALLIAGE DE SILICIUM DE PIECES EN CERAMIQUE OXYDE NON MOUILLABLE PAR LEDIT ALLIAGE**
VERFAHREN ZUM METALLISIEREN UND/ODER LÖTEN OXIDKERAMISCHER BAUTEILE MITTELS EINER DIESE NICHT BENETZENDEN SILIZIUMLEGIERUNG
METALLIZATION AND/OR BRAZING METHOD, USING A SILICON ALLOY, FOR OXIDE CERAMIC PARTS WHICH ARE NON-WETTABLE BY SAID ALLOY

(30) Priorité: 29.10.2001 FR 0113962
(43) Date de publication de la demande: 28.07.2004
(73) Titulaire: COMMISSARIAT A L'ENERGIE ATOMIQUE, 75752 Paris Cédex 15 (FR)
(72) Inventeur: CHAUMAT, Valérie, F-38760 Saint Paul de Varces (FR); PAGANO, Carole, F-38330 Saint-Ismier (FR)
(74) Mandataire: Poulin, Gérard
(86) Numéro de dépôt international: PCT/FR2002/003656
(87) Numéro de publication internationale: WO 2003/037823

(56) Documents cités:
- FR-A- 520 018
- FR-A- 2 328 678
- US-A- 4 636 434
- PATENT ABSTRACTS OF JAPAN vol. 1996, no. 07, 31 juillet 1996 (1996-07-31) & JP 08 059378 A (NIPPON CEMENT CO LTD), 5 mars 1996 (1996-03-05)

## Description

### DOMAINE TECHNIQUE

La présente invention est relative à un procédé de métallisation de pièces en céramique oxyde par un alliage métallique et à un procédé d'assemblage par brasage par ledit alliage, de pièces, dont l'une, au moins est en céramique oxyde.

Cette invention trouve son application, notamment, dans le domaine de l'électronique, en particulier pour les céramiques oxydes, utilisées comme isolants électriques.

### ETAT DE LA TECHNIQUE

Le domaine technique de l'invention peut être défini comme celui de la métallisation et du brasage de pièces en céramique.

On précise que, par métallisation, on entend l'action de revêtir la surface d'une pièce d'une mince couche de métal ou d'alliage.

Par brasage, on entend l'assemblage de deux ou plusieurs pièces par brasure, c'est-à-dire par soudure obtenue par interposition entre lesdites pièces à joindre d'un alliage ou d'un métal fusible.

Généralement, la métallisation ou le brasage de pièces en céramique pose un certain nombre de problèmes, dans la mesure où les céramiques communément utilisées présentent la particularité d'être non mouillables par la plupart des compositions de brasage, telles que les compositions à base d'argent, de cuivre, d'or ou leurs alliages, alors que ces mêmes compositions mouillent aisément les matériaux métalliques. Ce problème peut être surmonté en procédant à un traitement de surface de la céramique préalablement à la métallisation ou au brasage.

Un premier type de traitement de surface peut consister en une métallisation de ladite céramique, c'est-à-dire que l'on dépose une fine couche de métal, qui constitue une couche d'accrochage pour la composition de métallisation ou de brasure.

Le procédé le plus communément utilisé pour métalliser ou braser les céramiques, notamment les céramiques à base d'alumine, est le procédé dit moly-manganèse, décrit par K.WHITE et D.KRAMER dans Materials Science et Engineering, 75 (1985) 207-213, « Microstructure and Seal Strength Relation in the Molybdenum-Manganese Glass Metallization of Alumina Ceramics » [1]. Par ce procédé, une suspension contenant un mélange de poudres de manganèse et de molybdène est, dans un premier temps, appliquée sur la surface de la pièce en céramique et subit, dans un deuxième temps, une combustion dans une atmosphère humide et réductrice d'hydrogène et d'ammoniaque. Une telle atmosphère est nécessaire pour maintenir le molybdène à l'état de métal et permettre l'oxydation du manganèse métallique, grâce à la présence d'une certaine teneur en vapeur d'eau.

Toutefois, bien que ce procédé fonctionne avec des céramiques comprenant une teneur en alumine de 94-96 %, il ne fonctionne pas avec les céramiques ayant une teneur en alumine de 99.5 %. Afin de métalliser ou braser de telles surfaces, il est suggéré dans ce document d'additionner un verre à base de manganèse (MnO-SiO₂-Al₂O₃) à la poudre de molybdène, à la place du manganèse métal pur. Le verre à base de manganèse pénètre, lors du traitement thermique, au niveau des joints de grain de la céramique et forme une matrice vitreuse dans laquelle sont piégées les particules de molybdène, favorisant ainsi la métallisation. Le dépôt de verre, comportant des inclusions métalliques, est ensuite métallisé par dépôt électrolytique d'une couche de nickel et le brasage éventuel est ensuite réalisé à l'aide d'une composition de brasage à base de nickel.

Ce procédé présente l'inconvénient d'être lourd et complexe, du fait, notamment qu'il fait appel à de nombreux traitements successifs de la surface en céramique.

Un autre type de traitement de surface peut consister à déposer sur la pièce en céramique à métalliser ou braser, une couche non métallique, le dépôt de cette couche se faisant préalablement à la métallisation ou au brasage, ladite couche constituant une couche d'accrochage pour la composition de métallisation ou de brasure.

Ainsi, le brevet américain US n° 4 636 434 [2] décrit un procédé d'assemblage d'un matériau composite, constitué d'au moins un élément en céramique avec un autre élément en céramique ou en métal, ledit procédé consistant à assembler lesdits éléments au moyen d'un joint métallique formé entre les surfaces à assembler desdits éléments. Dans un premier temps, il est formé sur la ou les surfaces en céramique à assembler un film de carbone. Ce film de carbone est obtenu en appliquant sur la ou les surfaces à assembler une substance organique (telle que des solvants organiques, des résines) suivi d'un chauffage en atmosphère non oxydante. Dans un deuxième temps, il est formé sur le film de carbone un film de métal, ce film étant déposé selon diverses techniques, telles que la métallisation par pulvérisation cathodique. Enfin, les surfaces ainsi recouvertes sont assemblées en interposant un matériau de brasure entre lesdites surfaces suivi d'un chauffage adéquat. Le matériau de brasure décrit est un matériau choisi parmi les matériaux à base d'argent, à base de cuivre, à base de nickel, à base de laiton et à base de fer.

Toutefois, ce procédé présente les inconvénients suivants :
- il nécessite l'application de la composition de brasure sur toute la surface carbonée, afin d'assurer la formation du joint de brasure ;
- il met en oeuvre des compositions de brasure à base de métaux à bas point de fusion, ce qui fait que les joints de brasage résultant sont peu réfractaires.

Le brevet FR 2 328 678 [3] décrit un procédé de métallisation de pièces en céramiques par du silicium pur.

Ce procédé comprend successivement les étapes suivantes :
- une étape d'enduction par du carbone d'une surface à métalliser d'un substrat en céramique ;
- une étape de mise en contact de la surface enduite de carbone avec du silicium pur fondu, pour former une couche de silicium sur la surface enduite de carbone.

L'étape de mise en contact se fait par trempage du substrat enduit de carbone dans un bain de silicium pur fondu, le substrat étant ensuite retiré du bain à une vitesse permettant une cristallisation du silicium sur le substrat aux endroits recouvert de carbone.

Ce procédé présente les inconvénients suivants :
- compte tenu de l'angle de mouillabilité très important (pouvant être de l'ordre de 50-60°) que forme le silicium pur avec une surface plane de céramique, il est nécessaire de mettre en place, pour pallier cet inconvénient, une technique de trempage-retrait très complexe, pour obtenir un dépôt sur les zones de carbone, tel que cela est explicité ci-dessus ;
- pour obtenir une métallisation complète des zones carbonées, il est nécessaire de recouvrir toute la surface des zones carbonées par le silicium pur, ce qui est fait en plongeant l'intégralité de la pièce de céramique à métalliser dans un bain de silicium fondu.

D'autres procédés peuvent consister à utiliser des compositions, dites réactives, dans lesquelles sont incorporés des éléments très réactifs vis-à-vis des céramiques oxydes, lesdits éléments étant choisis parmi Ti, Zr, Hf, Nb, Al et Cr.

On peut citer, par exemple, le procédé « hydrure de titane » qui consiste à faire réagir dans un premier temps l'hydrure de titane sur la céramique oxyde, pour activer la surface de ladite céramique puis, dans un deuxième temps à effectuer le dépôt de la couche de métallisation sur la surface activée ou le dépôt de brasure, si l'on veut obtenir un assemblage de pièces.

Toutefois, l'emploi de l'hydrure de titane est extrêmement délicat, dans la mesure où l'hydrure de titane est un composé très instable, et nécessite un matériel de chauffage spécifique, qui rend ledit emploi peu accessible pour de nombreuses applications industrielles.

Parmi les procédés de métallisation ou brasage, mettant en jeu une composition réactive, l'on peut citer également les procédés utilisant des alliages réactifs « prêts à l'emploi » ne nécessitant pas de traitement préalable de la surface des céramiques à traiter.

Ainsi, la publication de brevet européen EP 0135 603 [4], mentionne l'utilisation d'alliages de brasure contenant de 0,25 % à 4 % en poids d'un élément réactif choisi parmi le titane, le vanadium, le zirconium et, entre autres, de 20 à 80 % en poids en argent et d'autres éléments. L'utilisation d'un tel alliage ne nécessite pas de traitement préalable de la surface à métalliser ou braser. Toutefois, de tels alliages sont fusibles à des températures allant de 600 à 950°C, ce qui les écarte pour une application à hautes températures, par exemple, supérieures à 1000 °C. De plus, ces alliages présentent une résistance à l'oxydation très médiocre au-dessus de 500 °C.

Le brevet d'invention FR 2 787 737 [5] présente un autre type de composition réactive de brasure, dans ce cas réfractaire, pour le brasage de l'alumine, comprenant une matrice soit de palladium, soit de nickel, soit d'un alliage de nickel et de palladium avec addition de titane et d'aluminium dans les trois cas.

Ainsi, les procédés de métallisation ou brasage de pièces en céramiques de l'art antérieur présentent tous l'un ou plusieurs des inconvénients suivants :
- ils nécessitent la mise en oeuvre de techniques très complexes telles que le trempage-retrait (comme c'est le cas pour le document FR 2 328 678) avec contrôle de la vitesse de retrait pour obtenir une métallisation correcte ;
- lorsqu'ils mettent èn oeuvre une couche d'accrochage (par exemple couche de métal ou couche de carbone), les procédés de l'art antérieur nécessitent un recouvrement intégral de ladite couche d'accrochage par la composition de métallisation ou de brasure pour obtenir un dépôt de métal sur toute la surface de cette couche.
- ils engendrent, du fait des compositions de métallisations ou de brasure utilisées, la formation de couches de métallisation ou de joints de brasure peu réfractaires ;
- ils ne s'appliquent qu'à des pièces de conception simple, dont les zones à métalliser ou assembler ne présentent pas de parties usinées, telles que des canaux, par exemple.

### EXPOSE DE L'INVENTION

Le but de la présente invention est donc de proposer un procédé de métallisation et un procédé de brasage de pièces en céramique oxyde qui ne présentent pas les inconvénients de l'art antérieur, ces procédés présentant, tous deux, la particularité de permettre la métallisation ou brasage sélectif par une même composition de certaines zones d'une surface de céramique oxyde non mouillable par ladite composition.

La demanderesse a ainsi découvert de façon surprenante qu'en utilisant un alliage de silicium avec au moins un autre métal, il était possible d'obtenir uniquement la métallisation ou le brasage de zones spécifiques de pièces en céramique, lesdites zones étant préalablement recouvertes d'une couche d'accrochage, cette métallisation ou ce brasage dit « sélectif » étant obtenu par le simple fait de déposer ledit alliage sur une partie de la pièce en céramique à métalliser ou braser.

Ainsi, l'invention a trait, selon un premier objet, à un procédé de métallisation par un alliage de silicium fusible à une température T1 de certaines zones de la surface d'une pièce en céramique oxyde non mouillable par ledit alliage, ledit procédé comprenant successivement les étapes suivantes :
- dépôt de carbone sur lesdites zones à métalliser de ladite pièce ; et
- dépôt de l'alliage de silicium sous forme solide sur au moins une partie de ladite pièce, de façon à ce que ledit alliage ait au moins un point de contact avec lesdites zones à métalliser ;
- chauffage à une température supérieure ou égale à T1, ledit alliage se rassemblant ainsi à l'état fondu sur lesdites zones à métalliser.

Ainsi, grâce à l'utilisation d'un alliage de silicium avec au moins un autre élément, il n'est pas nécessaire de répartir l'alliage sur toute la surface des zones à métalliser préalablement recouvertes de carbone (l'alliage devant avoir uniquement au moins un point de contact avec ladite surface), dans la mesure où cet alliage est apte à l'état fondu, c'est-à-dire après chauffage à une température supérieure ou égale à T1, T1 correspondant à la température de fusion de cet alliage, à se rassembler spontanément sur les zones recouvertes de carbone. Cet alliage métallise uniquement les zones recouvertes de carbone, en laissant intacte les zones non recouvertes par ledit carbone, formant ainsi un dépôt métallique continu d'épaisseur homogène.

L'aptitude de ces alliages à se déplacer à l'état fondu d'un point à l'autre d'une pièce en céramique oxyde, pour venir mouiller les zones recouvertes de carbone, est due à l'angle de mouillage très faible (généralement inférieur à 30°) que forme ces alliages à l'état fondu juste avant solidification avec une surface en céramique oxyde. Cet aptitude ne se retrouve pas avec le silicium pur, qui forme à l'état fondu, un angle de mouillage élevé avec une surface en céramique oxyde (angle pouvant être de l'ordre de 50-60°), la métallisation par du silicium pur nécessitent ainsi des techniques de dépôt très complexes, tel que cela est exposé dans le document FR 2 328 678.

Ce procédé permet avantageusement, grâce à l'utilisation d'alliages de silicium, d'obtenir, après refroidissement de l'alliage fondu, des couches de métallisation résistantes à de très hautes températures, en particulier des températures supérieures à 1200°C.

Enfin, ce procédé de métallisation est très simple à mettre en oeuvre.

L'étape de dépôt de l'alliage de silicium sous forme solide peut, par exemple, s'effectuer sur toute la surface de la pièce. Ledit alliage, suite au chauffage, se retirera alors spontanément de la surface dépourvue de carbone pour se concentrer au niveau des zones à métalliser.

Cette étape de dépôt peut également, selon l'invention, s'effectuer directement sur une partie uniquement des zones à métalliser, la condition étant que cet alliage ait au moins un point de contact avec lesdites zones à métalliser, c'est-à-dire les zones recouvertes de carbone.

L'invention a également trait, selon un second objet, à un procédé d'assemblage par brasage de deux pièces sur certaines, zones de leurs surfaces avec un alliage de silicium fusible à une température T1, au moins l'une des pièces étant en céramique oxyde non mouillable par ledit alliage, ledit procédé comprenant successivement les étapes suivantes :
- mise en contact des surfaces desdites pièces avec l'alliage de silicium sous forme solide, lesdites zones à assembler de la surface de la (les) pièces en céramique oxyde non mouillable(s) étant préalablement recouvertes de carbone, ledit alliage ayant au moins un point de contact avec lesdites zones recouvertes de carbone; et
- chauffage de l'ensemble formé par lesdites pièces et la composition à une température supérieure ou égale à T1, ledit alliage se rassemblant ainsi, à l'état fondu, sur les zones à assembler.

On précise pour les mêmes raisons que celles évoquées pour le premier objet, qu'il n'est pas nécessaire de déposer l'alliage sous forme solide sur l'intégralité des surfaces à assembler. L'alliage peut être placée en sandwich entre les pièces à braser mais peut être également positionnée à proximité des surfaces à assembler, en ayant uniquement un point de contact avec lesdites surfaces à assembler. Lors du chauffage, l'alliage de silicium, grâce à son faible angle de mouillage, a la capacité de se déplacer d'un point à l'autre jusqu'à venir mouiller uniquement les zones recouvertes de carbone et constituer, après refroidissement, un joint de brasure.

On précise, selon l'invention, que les pièces à braser peuvent être uniquement des pièces en céramiques oxydes non mouillables, auquel cas les étapes de recouvrement par du carbone devront être effectuées sur les surfaces à assembler de chaque pièce. On note que les pièces pouvant être assemblés avec au moins une pièce en céramique oxyde, conformément à l'invention, peuvent être, également, des pièces en carbure de silicium, nitrure de silicium, nitrure d'aluminium.

Ce procédé d'assemblage par brasage selon l'invention, permet d'assurer un brasage contrôlé avec un étalement de l'alliage parfaitement maîtrisé sur les zones à assembler, en évitant notamment la formation de congés de brasure, de bulle de démouillage ou encore de fuites de brasure sur les zones à ne pas assembler.

De plus, ce procédé grâce à l'utilisation d'alliage de silicium, permet d'obtenir les joints de brasure résistants à de très hautes températures, par des températures supérieures à 1200 °C, ce qui n'est pas le cas des procédés de l'art qui mettent en oeuvres des alliages à bas point de fusion, comme c'est le cas pour les alliages à base d'argent, de cuivre.

Selon l'invention, que ce soit pour le premier ou le second objet, la céramique oxyde peut être choisi parmi les céramiques à base d'alumine, à base de silice, les céramiques aluminosilicates, telles que la mullite et la cordiérite.

Selon l'invention, le carbone à déposer peut être appliqué par toute technique permettant d'obtenir un dépôt de carbone adhérant à une surface de céramique oxyde.

Ainsi, selon une première variante de l'invention, le carbone peut être déposé sous forme de poudre de graphite mélangée ou non à un liant organique.

Selon une seconde variante de l'invention, le carbone peut être déposé par des techniques de dépôt diverses telles que le dépôt chimique en phase vapeur (communément désigné par l'abréviation CVD pour Chemical Vapor Déposition), le dépôt physique en phase vapeur (communément désigné par l'abréviation PVD pour Physical Vapor Déposition). Les techniques CVD et PVD présentent l'avantage d'être des techniques parfaitement maîtrisables à un niveau industriel et pour lesquelles il est possible, notamment, d'utiliser des masques pour délimiter les zones à métalliser ou braser des zones à laisser intactes.

Enfin, selon une troisième variante de l'invention, le carbone peut être déposé par frottement avec une mine de graphite.

De préférence, l'on dépose selon l'invention, une quantité de carbone allant de 0,1 mg/cm² à 1 mg/cm².

Le fait d'utiliser du carbone dans le procédé de l'invention est particulièrement intéressant, dans la mesure où ce matériau est très abondant et peu coûteux.

Une fois que les zones à métalliser ou braser sont revêtues de carbone, il est nécessaire, selon l'invention, de déposer l'alliage de silicium, présentant une mouillabilité vis-à-vis du carbone déposée préalablement.

Pour obtenir un dépôt métallique ou un joint de brasure continu et d'épaisseur homogène, l'alliage de silicium utilisé dans le cadre de l'invention doit présenter une capacité à mouiller le carbone déposé sur la surface en céramique oxyde tout en présentant une capacité à se déplacer d'un point à l'autre d'une pièce en céramique oxyde, afin de mouiller sélectivement les zones recouvertes de carbone. Le choix d'un tel alliage selon les critères susmentionnés est à la portée de l'homme du métier. Avantageusement, l'alliage en silicium, utilisé dans le procédé de l'invention, comporte une teneur en silicium, en poids atomique, supérieure à 56 %.

Selon l'invention, l'alliage de silicium peut comporter avantageusement, en outre, au moins un élément métallique choisi parmi Co, Zr, Ti, Rh, V, Ce, Cr, Re, Ru, Y, Hf, Ir et Ge.

En particulier, l'alliage de silicium peut être choisi parmi les alliages de compositions suivantes :
- les alliages de silicium comprenant Co, avec une teneur en silicium allant de 58 à 97 %, en poids atomique ;
- les alliages de silicium comprenant Zr, avec une teneur en silicium allant de 87 à 97 %, en poids atomique ;
- les alliages de silicium comprenant Ti, avec une teneur en silicium allant de 76 à 97 %, en poids atomique ;
- les alliages de silicium comprenant Rh, avec une teneur en silicium allant de 58 à 97 %, en poids atomique ;
- les alliages de silicium comprenant V, avec une teneur en silicium allant de 95 à 97 %, en poids atomique ;
- les alliages de silicium comprenant Ce, avec une teneur en silicium allant de 81 à 97 %, en poids atomique ;
- les alliages de silicium comprenant Cr, avec une teneur en silicium allant de 75 à 97 %, en poids atomique ;
- les alliages de silicium comprenant Re, avec une teneur en silicium allant de 88 à 97 %, en poids atomique ;
- les alliages de silicium comprenant Ru, avec une teneur en silicium allant de 81 à 97 %, en poids atomique ;
- les alliages de silicium comprenant Y, avec une teneur en silicium allant de 75 à 97 %, en poids atomique ;
- les alliages de silicium comprenant Hf, avec une teneur en silicium allant de 84 à 97 %, en poids atomique ;
- les alliages de silicium comprenant Ir, avec une teneur en silicium allant de 60 à 97 %, en poids atomique ;
- les alliages de silicium comprenant Ge, avec une teneur en silicium allant de 60 à 97 %, en poids atomique.

A titre d'exemple, selon l'invention, lorsque la métallisation ou le brasage s'applique à une pièce en alumine, on peut utiliser un alliage de silicium comprenant, en poids atomique, 90 % Si et 10 % Zr.

Ce type d'alliage riche en silicium présente l'avantage de permettre l'obtention de zones de métallisation ou de joints de brasage particulièrement réfractaires, qui présentent notamment des propriétés mécaniques et des résistances à l'oxydation satisfaisantes à des températures supérieures à 1000°C.

Ce type d'alliages présente, de plus, l'avantage d'être « non-réactif » vis-à-vis des céramiques oxyde, notamment de type aluminosilicate, c'est-à-dire qu'il n'attaque pas la surface desdites céramiques, ce qui permet une métallisation ou brasage et une démétallisation ou « débrasage » desdites céramiques, la démétallisation ou « débragage » pouvant se faire par simple attaque chimique avec un mélange d'acides. Ainsi, l'utilisation de tels alliages facilite, par exemple, la réparation des zones métallisées ou brasées. Par exemple, ce type d'alliages peut être dissous par attaque chimique à l'acide fluorhydrique, et les zones ainsi démétallisées ou « débrasées » peuvent être à nouveau brasées ou métallisées.

Selon l'invention, l'alliage de silicium sous forme solide peut se présenter sous forme de poudre mélangée à un cément organique, notamment lorsqu'il est fragile, ce qui est le cas lorsque le lingot constitutif de l'alliage de silicium peut être concassé en poudre. L'alliage de silicium sous forme solide peut se présenter également sous forme d'un feuillard, notamment lorsqu'il est ductile.

Selon l'invention, lorsqu'on réalise le chauffage, au cours de l'ultime étape des procédés de métallisation et de brasage, celui-ci s'effectue, de préférence, dans un four sous vide ou sous atmosphère de gaz inerte.

Par exemple, le gaz est choisi parmi l'argon ou l'azote.

Le fait de travailler sous atmosphère de gaz inerte ou sous vide est particulièrement avantageux, selon l'invention, dans la mesure où cela évite la formation éventuelle de toute couche d'oxyde lors du chauffage, ce qui contribuerait à dégrader le mouillage de la composition de métallisation sur les zones de la céramique oxyde recouvertes de carbone.

Les procédés de métallisation ou d'assemblage par brasage, selon l'invention, sont particulièrement intéressants, dans la mesure où ils peuvent être mis en oeuvre dans de nombreux secteurs.

Ainsi, dans le domaine de la métallisation seule, l'application principale du procédé selon l'invention, concerne l'électronique et l'électrotechnique pour réaliser des supports de circuits intégrés, supportant des conditions extrêmes de température et d'oxydation.

Dans le domaine de l'assemblage par brasage, les applications du procédé selon l'invention, sont multiples. On peut citer, entre autres, le génie thermique, notamment les échangeurs de chaleur, les condenseurs, le génie chimique, notamment les réacteurs chimiques, la mécanique, notamment les pièces de friction, les outils d'usinage/de découpe.

L'invention va maintenant être décrite en référence aux exemples suivants donnés à titre illustratif mais non limitatif.

### EXEMPLE 1.

On prépare un alliage à base de silicium comportant, en poids atomique, une teneur de 90 % en silicium et 10 % en zirconium à partir de poudres. L'alliage est mélangé ensuite à un liant organique, afin d'obtenir une pâte.

En parallèle, on prépare la surface d'une rondelle d'alumine de diamètre 25 mm par dégraissage suivi d'un séchage. On dépose sur cette rondelle du carbone avec une mine de graphite, le dépôt se présentant sous forme d'une croix avec des branches de 1 cm de long et 1 mm de largeur. On recouvre le centre de cette croix par 300 mg du mélange alliage-liant, sans recouvrir les branches. On introduit l'ensemble dans un four sous vide et on chauffe à une température de 1420 °C pendant 5 minutes, afin de fondre le mélange. Après ce traitement thermique, on constate que le mélange a recouvert uniquement la croix sans recouvrir la surface d'alumine non graphitée.

### EXEMPLE 2.

On prépare un alliage à base de silicium et zirconium, que l'on mélange ensuite à un liant, conformément à l'exemple 1.

On prépare la surface d'un disque d'alumine, de diamètre 25 mm par dégraissage suivi d'un séchage. Ensuite, on dépose du carbone par frottement de la surface avec une mine de graphite sur la moitié du disque d'alumine. On place 400 mg du mélange alliage-liant au centre du disque, de façon à recouvrir à la fois la zone graphitée et la zone non graphitée. L'ensemble est traité thermiquement selon les indications de l'exemple 1. On constate, à l'issue de ce traitement, que l'alliage a quitté la zone non graphitée et s'est placé uniquement sur la zone graphitée.

### EXEMPLE 3.

On prépare un alliage de silicium comportant, en poids atomique, une teneur de 77,5 % en silicium et 22,5 % en cobalt. L'alliage est ensuite mélangé à un liant organique, afin d'obtenir une pâte. La surface d'une rondelle d'alumine est traitée et recouverte de carbone selon un motif en croix conformément à l'exemple 1. On dépose le mélange alliage-liant au centre de la croix, c'est-à-dire à l'intersection des branches, sans en revêtir les branches. L'ensemble est placé dans un four sous vide et chauffé à une température de 1380°C pendant 1 minute. Après ce traitement thermique, l'alliage a recouvert la croix de façon continu, tout en laissant intactes les zones non recouvertes de carbone.

### EXEMPLE 4.

On prépare un alliage de silicium comportant, en poids atomique, une teneur de 66,67 % de silicium et 33,33 % de Co. L'alliage est ensuite mélangé à un liant organique, afin d'obtenir une pâte. La surface d'une rondelle d'alumine est traitée et complètement recouverte de carbone conformément à l'exemple 1. On dépose le mélange alliage-liant au centre de la rondelle. L'ensemble est placé dans un four sous vide et chauffé à une température de 1380°C pendant 1 minute. A la sortie du four, l'alliage s'est parfaitement étalé et recouvre toute la surface de la rondelle initialement revêtue de carbone. L'angle de mouillage mesuré de cet alliage fondu avec la surface de la céramique oxyde est inférieur à 30°, ce qui explique le parfait étalement de cet alliage sur la surface recouverte de carbone.

### EXEMPLE COMPARATIF 1.

La surface d'une rondelle d'alumine est recouverte de carbone sous forme d'une croix conformément à l'exemple 1. On dépose du silicium pur (plus précisément, un mélange de poudre de silicium pur avec un liant organique) au centre de la croix, sans en recouvrir les branches. L'ensemble est placé dans un four sous vide et chauffé à une température de 1420°C pendant 1 minute. Après ce traitement thermique, on constate que le silicium s'est étalé sur la croix de façon discontinue et que le dépôt présente une épaisseur variable. Un amas important de silicium est encore présent au centre de la croix. L'angle de mouillage mesuré pour le silicium pur est de l'ordre de 50-60°, valeur trop élevée pour permettre un parfait étalement du silicium.

## Revendications

1. Procédé de métallisation par un alliage de silicium fusible à une température T1 de certaines zones de la surface d'une pièce en céramique oxyde non mouillable par ledit alliage, ledit procédé comprenant successivement les étapes suivantes :
- dépôt de carbone sur lesdites zones à métalliser de ladite pièce ; et
- dépôt de l'alliage de silicium sous forme solide sur au moins une partie de ladite pièce, de façon à ce que ledit alliage ait au moins un point de contact avec lesdites zones à métalliser ;
- chauffage à une température supérieure ou égale à T1, ledit alliage se rassemblant à l'état fondu sur lesdites zones à métalliser.

2. Procédé d'assemblage par brasage de deux pièces sur certaines zones de leurs surfaces avec un alliage de silicium fusible à une température T1, au moins l'une des pièces étant en céramique oxyde non mouillable par ledit alliage, ledit procédé comprenant successivement les étapes suivantes :
- mise en contact des surfaces desdites pièces avec l'alliage de silicium sous forme solide, lesdites zones à assembler de la surface de la (les) pièces en céramique oxyde non mouillable(s) étant préalablement recouvertes de carbone et ledit alliage ayant au moins un point de contact avec lesdites zones recouvertes de carbone; et
- chauffage de l'ensemble formé par lesdites pièces et la composition à une température supérieure ou égale à T1, ledit alliage se rassemblant ainsi, à l'état fondu, sur les zones à assembler.

3. Procédé selon l'une quelconque des revendications 1 à 2, dans lequel la céramique oxyde est choisi parmi les céramiques à base d'alumine, à base de silice, les céramiques aluminosilicates.

4. Procédé selon l'une quelconque des revendications 1 à 3, dans lequel le carbone est déposé sous forme de poudre de graphite mélangée ou non à un liant organique.

5. Procédé selon l'une quelconque des revendications 1 à 3, dans lequel le carbone est déposé par dépôt physique en phase vapeur ou dépôt chimique en phase vapeur.

6. Procédé selon l'une quelconque des revendications 1 à 3, dans lequel le carbone est déposé par frottement avec une mine de graphite.

7. Procédé selon l'une quelconque des revendications 1 à 6, dans lequel l'on dépose une quantité de carbone allant de 0.1 mg/cm² à 1 mg/cm².

8. Procédé selon l'une quelconque des revendications 1 à 4, dans lequel l'alliage de silicium comporte une teneur en silicium, en poids atomique, supérieure à 56 %.

9. Procédé selon l'une quelconque des revendications 1 à 8, dans lequel l'alliage de silicium comprend, en outre, au moins un élément métallique choisi parmi Co, Zr, Ti, Rh, V, Ce, Cr, Re, Ru, Y, Hf, Ir et Ge.

10. Procédé selon la revendication 9, dans lequel l'alliage de silicium est choisi parmi les alliages de compositions suivantes :
- les alliages de silicium comprenant Co, avec une teneur en silicium allant de 58 à 97 %, en poids atomique ;
- les alliages de silicium comprenant Zr, avec une teneur en silicium allant de 87 à 97 %, en poids atomique ;
- les alliages de silicium comprenant Ti, avec une teneur en silicium allant de 76 à 97 %, en poids atomique ;
- les alliages de silicium comprenant Rh, avec une teneur en silicium allant de 58 à 97 %, en poids atomique ;
- les alliages de silicium comprenant V, avec une teneur en silicium allant de 95 à 97 %, en poids atomique ;
- les alliages de silicium comprenant Ce, avec une teneur en silicium allant de 81 à 97 %, en poids atomique ;
- les alliages de silicium comprenant Cr, avec une teneur en silicium allant de 75 à 97 %, en poids atomique ;
- les alliages de silicium comprenant Re, avec une teneur en silicium allant de 88 à 97 %, en poids atomique ;
- les alliages de silicium comprenant Ru, avec une teneur en silicium allant de 81 à 97 %, en poids atomique ;
- les alliages de silicium comprenant Y, avec une teneur en silicium allant de 75 à 97 %, en poids atomique ;
- les alliages de silicium comprenant Hf, avec une teneur en silicium allant de 84 à 97 %, en poids atomique ;
- les alliages de silicium comprenant Ir, avec une teneur en silicium allant de 60 à 97 %, en poids atomique ;
- les alliages de silicium comprenant Ge, avec une teneur en silicium allant de 60 à 97 %, en poids atomique.

11. Procédé selon l'une quelconque des revendications 1 à 10, dans lequel l'alliage de silicium sous forme solide est sous forme de poudre mélangée à un cément organique.

12. Procédé selon l'une quelconque des revendications 1 à 10, dans lequel l'alliage de silicium sous forme solide est sous forme de feuillard.

13. Procédé selon l'une quelconque des revendications 1 à 12, dans lequel le chauffage s'effectue dans un four sous vide ou sous atmosphère de gaz inerte.

## Claims

1. Process for the metallization with a silicon alloy melting at a temperature T1 of certain zones of the surface of a part made of an oxide ceramic unable to be wetted by the said alloy, the said process comprising, in succession, the following steps:
- deposition of carbon on the said zones to be metallized of the said part;
- deposition of the silicon alloy in solid form on at least one portion of the said part, so that the said alloy has at least one point of contact with the said zones to be metallized; and
- heating to a temperature greater than or equal to T1, the said alloy thus gathering in the molten state on the said zones to be metallized.

2. Process for joining two parts by brazing them over certain zones of their surfaces with a silicon alloy melting at a temperature T1, at least one of the parts being made of an oxide ceramic unable to be wetted by the said alloy, the said process comprising, in succession, the following steps:
- contacting of the surfaces of the said parts with the silicon alloy in solid form, the said zones to be joined together of the surface of the unwettable part(s) made of an oxide ceramic being covered beforehand with carbon, the said alloy having at least one point of contact with the said carbon-covered zones; and
- heating of the assembly formed by the said parts and the said alloy to a temperature greater than or equal to T1, the said alloy thus gathering, in the molten state, on the zones to be joined.

3. Process according to either of Claims 1 and 2, in which the oxide ceramic is chosen from alumina-based ceramics, silica-based ceramics and aluminosilicate ceramics.

4. Process according to any one of Claims 1 to 3, in which the carbon is deposited in the form of graphite powder that may or may not be blended with an organic binder.

5. Process according to any one of Claims 1 to 3, in which the carbon is deposited by physical vapour deposition or chemical vapour deposition.

6. Process according to any one of Claims 1 to 3, in which the carbon is deposited by rubbing with a graphite ore.

7. Process according to any one of Claims 1 to 6, in which an amount of carbon ranging from 0.1 mg/cm² to 1 mg/cm² is deposited.

8. Process according to any one of Claims 1 to 4, in which the silicon alloy has a silicon content of greater than 56 at%.

9. Process according to any one of Claims 1 to 8, in which the silicon alloy also contains at least one metal element chosen from Co, Zr, Ti, Rh, V, Ce, Cr, Re, Ru, Y, Hf, Ir and Ge.

10. Process according to Claim 9, in which the silicon alloy is chosen from the alloys having the following compositions:
- Co-containing silicon alloys with a silicon content ranging from 58 to 97 at%;
- Zr-containing silicon alloys with a silicon content ranging from 87 to 97 at%;
- Ti-containing silicon alloys with a silicon content ranging from 76 to 97 at%;
- Rh-containing silicon alloys with a silicon content ranging from 58 to 97 at%;
- V-containing silicon alloys with a silicon content ranging from 95 to 97 at%;
- Ce-containing silicon alloys with a silicon content ranging from 81 to 97 at%;
- Cr-containing silicon alloys with a silicon content ranging from 75 to 97 at%;
- Re-containing silicon alloys with a silicon content ranging from 88 to 97 at%;
- Ru-containing silicon alloys with a silicon content ranging from 81 to 97 at%;
- Y-containing silicon alloys with a silicon content ranging from 75 to 97 at%;
- Hf-containing silicon alloys with a silicon content ranging from 84 to 97 at%;
- Ir-containing silicon alloys with a silicon content ranging from 60 to 97 at%;
- Ge-containing silicon alloys with a silicon content ranging from 60 to 97 at%.

11. Process according to any one of Claims 1 to 10, in which the silicon alloy in solid form is in the form of a powder blended with an organic binder.

12. Process according to any one of Claims 1 to 10, in which the silicon alloy in solid form is in the form of a foil.

13. Process according to any one of Claims 1 to 12, in which the heating is carried out in a furnace under vacuum or in an inert gas atmosphere.

## Patentansprüche

1. Verfahren zur Metallisierung bestimmter Zonen der Oberfläche eines Werkstückes aus Oxidkeramik mit einer Siliciumlegierung, die bei einer Temperatur T1 schmelzbar ist, mit der das Werkstück aus Oxidkeramik nicht benetzbar ist, wobei das genannte Verfahren nacheinander die folgenden Stufen umfasst:
- Abscheidung von Kohlenstoff auf den zu metallisierenden Zonen des genannten Werkstücks; und
- Abscheidung der Siliciumlegierung in fester Form auf mindestens einem Teil des genannten Werkstückes in der Weise, dass die genannte Legierung mindestens einen Kontaktpunkt mit den zu metallisierenden Zonen aufweist; und
- Erwärmen auf eine Temperatur von ≥ T1, bei der die genannte Legierung sich auf den zu metallisierenden Zonen im geschmolzenen Zustand sammelt.

2. Verfahren zum Vereinigen durch Verlöten von zwei Werkstücken an bestimmten Zonen ihrer Oberflächen mit einer Siliciumiegierung, die bei einer Temperatur T1 schmelzbar ist, wobei mindestens eines der Werkstücke aus Oxidkeramik besteht, die mit der genannten Legierung nicht benetzbar ist, wobei das Verfahren nacheinander die folgenden Stufen umfasst:
- Inkontaktbringen der Oberflächen der genannten Werkstücke mit der Siliciumlegierung in fester Form, wobei die miteinander zu vereinigenden Zonen der Oberfläche des (der) Werkstücks (Werkstücke) aus nicht benetzbarer Oxidkeramik vorher mit Kohlenstoff bedeckt worden sind, und die genannte Legierung mindestens einen Kontaktpunkt mit den mit Kohlenstoff bedeckten Zonen aufweist; und
- Erwärmen der durch die genannten Werkstücke und die Zusammensetzung gebildeten Einheit auf eine Temperatur von ≥ T1, wobei die Legierung auf diese Weise sich im geschmolzenen Zustand auf den zusammenzufügenden Zonen sammelt.

3. Verfahren nach einem der Ansprüche 1 bis 2, bei dem die Oxidkeramik ausgewählt wird unter den Keramiken auf Basis von Aluminiumoxid, auf Basis von Siliciumdioxid und den Aluminosilicat-Keramiken.

4. Verfahren nach einem der Ansprüche 1 bis 3, bei dem der Kohlenstoff in Form eines Graphitpulvers, gegebenenfalls im Gemisch mit einem organischen Bindemittel, abgeschieden wird.

5. Verfahren nach einem der Ansprüche 1 bis 3, bei dem der Kohlenstoff durch physikalische Abscheidung in der Dampfphase (Gasphase) oder durch chemische Abscheidung in der Dampfphase (Gasphase) abgeschieden wird.

6. Verfahren nach einem der Ansprüche 1 bis 3, bei dem der Kohlenstoff durch Reiben mit einer Graphitmine abgeschieden wird.

7. Verfahren nach einem der Ansprüche 1 bis 6, bei dem man den Kohlenstoff in einer Menge von 0,1 bis 1 mg/cm² abscheidet.

8. Verfahren nach einem der Ansprüche 1 bis 4, bei dem die Siliciumlegierung einen Siliciumgehalt von mehr als 56 Atom-Gew.-% aufweist.

9. Verfahren nach einem der Ansprüche 1 bis 8, bei dem die Siliciumlegierung außerdem mindestens ein Metallelement, ausgewählt aus der Gruppe Co, Zr, Ti, Rh, V, Ce, Cr, Re, Ru, Y, Hf, Ir und Ge, enthält.

10. Verfahren nach Anspruch 9, bei dem die Siliciumlegierung ausgewählt wird aus Legierungen mit den folgenden Zusammensetzungen:
- Co enthaltende Siliciumlegierungen, die einen Siliciumgehalt von 58 bis 97 Atom-Gew.-% aufweisen;
- Zr enthaltende Siliciumlegierungen, die einen Siliciumgehalt von 87 bis 97 Atom-Gew.-% aufweisen;
- Ti enthaltende Siliciumlegierungen, die einen Siliciumgehalt von 76 bis 97 Atom-Gew.-% aufweisen;
- Rh enthaltende Siliciumlegierungen, die einen Siliciumgehalt von 58 bis 97 Atom-Gew.-% aufweisen;
- V enthaltende Siliciumlegierungen, die einen Siliciumgehalt von 95 bis 97 Atom-Gew.-% aufweisen;
- Ce enthaltende Siliciumlegierungen, die einen Siliciumgehalt von 81 bis 97 Atom-Gew.-% aufweisen;
- Cr enthaltende Siliciumlegierungen, die einen Siliciumgehalt von 75 bis 97 Atom-Gew.-% aufweisen;
- Re enthaltende Siliciumlegierungen, die einen Siliciumgehalt von 88 bis 97 Atom-Gew.-% aufweisen;
- Ru enthaltende Siliciumlegierungen, die einen Siliciumgehalt von 81 bis 97 Atom-Gew.-% aufweisen;
- Y enthaltende Siliciumlegierungen, die einen Siliciumgehalt von 75 bis 97 Atom-Gew.-% aufweisen;
- Hf enthaltende Siliciumlegierungen, die einen Siliciumgehalt von 84 bis 97 Atom-Gew.-% aufweisen;
- Ir enthaltende Siliciumlegierungen, die einen Siliciumgehalt von 60 bis 97 Atom-Gew.-% aufweisen; und
- Ge enthaltende Siliciumlegierungen, die einen Siliciumgehalt von 60 bis 97 Atom-Gew.-% aufweisen.

11. Verfahren nach einem der Ansprüche 1 bis 10, bei dem die in fester Form vorliegende Siliciumlegierung die Form eines Pulvers, gemischt mit einem organischen Bindemittel (Zement), hat.

12. Verfahren nach einem der Ansprüche 1 bis 10, bei dem die in fester Form vorliegende Siliciumlegierung die Form eines Bandes hat.

13. Verfahren nach einem der Ansprüche 1 bis 12, bei dem das Erwärmen in einem Ofen unter Vakuum oder in einer Inertgasatmosphäre durchgeführt wird.
